# EUROPÄISCHE PATENTSCHRIFT

(11) **EP 4 216 201 B1**
(45) Veröffentlichungstag und Bekanntmachung des Hinweises auf die Patenterteilung: **17.09.2025**
(21) Anmeldenummer: 22152513.2
(22) Anmeldetag: 20.01.2022
(51) Int. Cl.: G09F 21/04, G09F 27/00, G09F 19/12, B60Q 1/26

(54) **FAHRZEUG MIT HOLOGRAPHISCHER FOLIE**
VEHICLE WITH HOLOGRAPHIC FILM
VÉHICULE POURVU DE FILM HOLOGRAPHIQUE

(43) Veröffentlichungstag der Anmeldung: 26.07.2023
(73) Patentinhaber: Hübner GmbH & Co. KG, 34123 Kassel (DE)
(72) Erfinder: Burhenn, Marcel, 37247 Großalmerode (DE); Hübsch, Daniel, 34277 Fuldabrück (DE)

(56) Entgegenhaltungen:
- CN-A- 104 575 337
- DE-A1- 4 211 728
- US-A- 4 818 048

## Beschreibung

Die vorliegende Erfindung betrifft ein Fahrzeug, insbesondere Schienenfahrzeug oder Straßenfahrzeug, mit einer Wandfläche oder einer Fensterscheibe, einer Bilderzeugungseinheit, einer auf die Wandfläche oder die Fensterscheibe aufgebrachten holographischen Folie und einem Rechner, wobei die Bilderzeugungseinheit derart wirksam mit dem Rechner verbunden ist, dass die Bilderzeugungseinheit in einem Betrieb des Fahrzeugs von dem Rechner ein Steuersignal erhält, wobei die Bilderzeugungseinheit, die holographische Folie und der Rechner derart eingerichtet und angeordnet sind, dass in dem Betrieb des Fahrzeugs eine für einen Betrachter visuell wahrnehmbare Information erzeugt wird.

Wandflächen und Fensterscheiben von öffentlichen Schienen- oder Straßenfahrzeugen weisen in der Praxis kaum einen zusätzlichen Nutzen auf, der über den ihnen innewohnenden Nutzen als Wand- bzw. Fensterbegrenzung hinausgeht. Bekanntermaßen werden solche Wandflächen oder Fensterscheiben höchstens noch als Werbefläche für aufgeklebte Plakate genutzt.

Die US 4 818 048 A offenbart eine holographische Head-up-Anzeige zum Anzeigen eines Bedienfeldes an der Windschutzscheibe eines Fahrzeugs und zum Anzeigen der manuellen Bewegungen des Fahrzeugführers und der manuellen Auswahlvorgänge auf dem Bedienfeld. Die Anzeige umfasst eine Anzahl von kantenbeleuchtbaren Hologrammschichten, die eine Hintergrundanzeige sowie Berührungs- und Aktivierungsanzeigen bereitstellen. Signale vom Bedienfeld beleuchten selektiv die jeweiligen Schichten und Teile davon als Reaktion auf Bedienvorgänge auf dem Bedienfeld, um eine Windschutzscheibenanzeige zu erzeugen. In einer zweiten Ausführungsform wird eine virtuelle Head-up-Hintergrundanzeige durch ein erstes Hologramm bereitgestellt, und Punkte, die die Fingerposition des Fahrers auf dem Bedienfeld anzeigen, werden durch selektive Beleuchtung eines zweiten Hologramms auf der Hintergrundanzeige positioniert.

Die CN 104 575 337 A offenbart ein U-Bahn-Glaswand-Werbesystem mit menschlicher Körperwahrnehmung, das einen holografischen Projektionsfilm, einen Computer-Hauptrechner, einen Werbespiel-Controller, einen Projektor und eine Soundbox umfasst. Der holografische Projektionsfilm wird auf die Außenfläche der U-Bahn-Glaswand geklebt wird. Der Computer-Hauptrechner ist in einem U-Bahn-Wagen angeordnet und außerdem sind Werbevideos im Inneren des Computer-Hauptrechners gespeichert. Die Werbespielsteuerung, der Projektor und die Soundbox sind am oberen Ende der U-Bahn-Glaswand angeordnet. Die Werbespielsteuerung umfasst einen MSP430-Ein-Chip-Mikrocomputer, eine Stromversorgungsbatterie, ein Quarzoszillationsschaltungsmodul, ein Rücksetzschaltungsmodul und ein USB-Kommunikationsschaltungsmodul (Universal Serial Bus). Die Stromversorgungsbatterie versorgt jedes Stromverbrauchsmodul in der Werbespielsteuerung mit Strom. Das Quarzoszillationsschaltungsmodul, das Rücksetzschaltungsmodul und das USB-Kommunikationsschaltungsmodul sind mit dem MSP430-Einchip-Mikrocomputer verbunden. Das USB-Kommunikationsschaltungsmodul ist über eine USB-Datenleitung mit einer USB-Schnittstelle des Computer-Großrechners verbunden, und das Eingangsende des MSP430-Einzelchip-Mikrocomputers ist mit einem Infrarot-Körpersensor verbunden, der dazu dient, zu erkennen, wenn sich eine Person in der Nähe der U-Bahn-Glaswand befindet. Das Anzeigesystem für die U-Bahn-Glaswand, das den menschlichen Körper erfasst, hat den Vorteil, dass die Ressourcenauslastung und die Anzeige verbessert wird.

Die DE 42 11 728 A1 offenbar eine holographische Anzeigevorrichtung auf einer Sichtscheibe mit einer oder mehreren an der Sichtscheibe angekoppelten Laser- oder Lumineszenzdioden, einem oder mehreren in die Sichtscheibe integrierten Monomode-Lichtwellenleitern und einem oder mehreren integrierten holographischen Auskoppelgittern, die Licht aus dem Monomode-Lichtwellenleiter auskoppeln und in ein Gesichtsfeld einspiegeln, das ein auf die Sichtscheibe blickender Bediener erfassen kann.

Vor diesem Hintergrund ist es eine Aufgabe der vorliegenden Erfindung, den Nutzen einer Wandfläche oder Fensterscheibe eines Fahrzeuges, wie eines Schienen- oder Straßenfahrzeuges, zu erweitern, insbesondere eine adaptive oder interaktive Darstellung von Informationen auf diesen Flächen zu ermöglichen.

Diese Aufgabe wird erfindungsgemäß gelöst durch ein Fahrzeug, insbesondere Schienenfahrzeug oder Straßenfahrzeug, mit einer Wandfläche oder Fensterscheibe, einer Bilderzeugungseinheit zum Erzeugen eines Bildes, einer auf die Wandfläche oder die Fensterscheibe aufgebrachten holographischen Folie, einem Rechner und einem Sensor, wobei die Bilderzeugungseinheit derart wirksam mit dem Rechner verbunden ist, dass die Bilderzeugungseinheit in einem Betrieb des Fahrzeugs von dem Rechner ein Steuersignal erhält, wobei die Bilderzeugungseinheit, die holographische Folie und der Rechner derart eingerichtet und angeordnet sind, dass in dem Betrieb des Fahrzeugs eine für einen Betrachter visuell wahrnehmbare Information erzeugt wird, wobei der Sensor derart wirksam mit dem Rechner verbunden ist, dass der Rechner in dem Betrieb des Fahrzeugs von dem Sensor ein Messsignal erhält, und wobei der Rechner derart eingerichtet ist, dass er in dem Betrieb des Fahrzeugs den an die Bilderzeugungseinheit übermittelten Steuerbefehl in Abhängigkeit von dem Messsignal ändert, sodass das von der Bilderzeugungseinheit erzeugte Bild und in der Folge die visuelle wahrnehmbare Information an das Messsignal angepasst wird. Dabei weist die holographische Folie erfindungsgemäß eine Mehrzahl von in der holographischen Folie strukturierten Lichtwellenleitern auf, wobei die holographische Folie eine erste Gitterstruktur zum Auskoppeln von Licht aus der Mehrzahl von Lichtwellenleitern aufweist, wobei die Bilderzeugungseinheit und die holographische Folie derart eingerichtet und angeordnet sind, dass in dem Betrieb des Fahrzeugs von der Bilderzeugungseinheit erzeugtes Licht innerhalb einer Transportebene durch die mehreren Lichtwellenleiter der holographischen Folie geleitet und mittels der ersten Gitterstruktur aus der holographischen Folie ausgekoppelt wird, sodass das ausgekoppelte Licht eine mehrere Bildpunkte aufweisende Projektion erzeugt, welche die visuell wahrnehmbare Information umfasst, und wobei die Bilderzeugungseinheit und die holographische Folie derart ausgebildet und zueinander angeordnet sind, dass ein von der Bilderzeugungseinheit erzeugtes Licht über einen oder mehrere senkrecht zur Transportebene stehende Lichtkegel in die mehreren Lichtwellenleiter eingekoppelt wird.

Ein derartiges Fahrzeug ermöglicht es, Informationen für Fahrzeugbedienende oder Mitfahrende an vielen unterschiedlichen Flächen sichtbar zu machen, sodass die Bedienung erleichtert bzw. das Nutzungserlebnis allgemein verbessert wird. Dies ist insbesondere dann von Vorteil, wenn die holographische Folie auf eine Fensterscheibe des Fahrzeugs aufgebracht ist. So kann zum Beispiel der Mitfahrende eines Schienenfahrzeugs von seinem Sitzplatz aus die ihm nächstliegende Fensterscheibe zur Informationsgewinnung oder Interaktion nutzen. Beispielsweise können über eine auf dieser Fensterscheibe aufgebrachte holographische Folie Informationen über die Wetterbedingungen am Zielort einer Reise, Nachrichteninformationen, interaktive Fahrkarten oder interaktive Entertainment- und Online-Shopping-Optionen wiedergegeben werden.

In einer Ausführungsform des erfindungsgemäßen Fahrzeugs sind die Bilderzeugungseinheit und die holographische Folie derart ausgebildet und angeordnet, dass das von der Bilderzeugungseinheit erzeugte Bild in die holographische Folie eingekoppelt wird. Die hierdurch bewirkte strukturelle Trennung von Bilderzeugungseinheit und holographischer Folie ermöglicht einfache Wartungs- und Reparaturarbeiten. Insbesondere können die Bilderzeugungseinheit und die holographische Folie unabhängig voneinander ersetzt werden.

In einer Ausführungsform des erfindungsgemäßen Fahrzeugs ist die holographische Folie derart ausgebildet und angeordnet, dass die visuell wahrnehmbare Information aus der holographischen Folie ausgekoppelt wird und anschließend unmittelbar für den Verwender des Fahrzeugs bei einer üblichen Verwendung des Fahrzeugs wahrnehmbar ist, insbesondere ohne dass das ausgekoppelte Licht nochmals reflektiert werden muss, um für den Verwender bei einer üblichen Verwendung des Fahrzeugs wahrnehmbar zu werden. Dies ist zum Beispiel bei holographischen Folien, die unmittelbar auf einer Fensterscheibe des Fahrzeugs aufgebracht sind, vorteilhaft.

In einer Ausführungsform des erfindungsgemäßen Fahrzeugs ist die holographische Folie gebildet durch einen Film aus einem Polymermaterial.

Erfindungsgemäß weist die holographische Folie eine Mehrzahl von in der holographischen Folie strukturierten Lichtwellenleitern auf, wobei die holographische Folie eine erste Gitterstruktur zum Auskoppeln von Licht aus der Mehrzahl von Lichtwellenleitern aufweist, wobei die Bilderzeugungseinheit und die holographische Folie derart eingerichtet und angeordnet sind, dass in dem Betrieb des Fahrzeugs von der Bilderzeugungseinheit erzeugtes Licht innerhalb einer Transportebene durch die mehreren Lichtwellenleiter der holographischen Folie geleitet und mittels der ersten Gitterstruktur aus der holographischen Folie ausgekoppelt wird, sodass das ausgekoppelte Licht eine mehrere Bildpunkte aufweisende Projektion erzeugt, welche die visuell wahrnehmbare Information umfasst. Die hierbei verwendete holographische Folie mit mehreren Lichtwellenleitern ist besonders einfach und flexibel an bestehenden Wandflächen oder Fensterscheiben von Fahrzeugen anzubringen.

In einer Ausführungsform des erfindungsgemäßen Fahrzeugs umfasst die erste Gitterstruktur ein Volumen-Bragg-Gitter. Solche Gitter ermöglichen auf vorteilhafte Weise das Auskoppeln von Licht aus mehreren Lichtwellenleitern.

In einer Ausführungsform des erfindungsgemäßen Fahrzeugs umfasst die erste Gitterstruktur ein gemultiplextes Volumen-Bragg-Gitter. Hierdurch kann die mögliche Komplexität der mittels der holographischen Folie darstellbaren Projektion nochmals erhöht werden.

In einer Ausführungsform des erfindungsgemäßen Fahrzeugs ist die erste Gitterstruktur derart ausgebildet, dass das durch die mehreren Lichtwellenleiter der holographischen Folie geleitete Licht, innerhalb im Wesentlichen senkrecht zur Transportebene stehender Lichtkegel, aus den mehreren Lichtwellenleitern ausgekoppelt wird. Dies ist eine besonders einfache und daher kostengünstig herstellbare Geometrieanordnung von innerhalb der holographischen Folie transportiertem und aus der holographischen Folie austretendem Licht.

In einer Ausführungsform des erfindungsgemäßen Fahrzeugs weist die holographische Folie eine zweite Gitterstruktur auf, wobei die Bilderzeugungseinheit und die holographische Folie derart eingerichtet und angeordnet sind, dass in dem Betrieb des Fahrzeugs das von der Bilderzeugungseinheit erzeugte Licht mittels der zweiten Gitterstruktur in die Mehrzahl von Lichtwellenleitern eingekoppelt wird. Durch ein solches Einkoppeln können die Bilderzeugungseinheit und die holographische Folie besonders platzsparend ausgebildet bzw. angeordnet sein.

In einer Ausführungsform des erfindungsgemäßen Fahrzeugs ist die erste Gitterstruktur von der zweiten Gitterstruktur beabstandet angeordnet. Das Licht wird somit an einer ersten Position der holographischen Folie in die Mehrzahl von Lichtwellenleitern eingekoppelt, dann innerhalb der Transportebene zu einer von der ersten Position beabstandeten zweiten Position geleitet und anschließend an der zweiten Position aus der Mehrzahl von Lichtwellenleitern ausgekoppelt, um die Projektion zu erzeugen.

In einer Ausführungsform des erfindungsgemäßen Fahrzeugs umfasst die zweite Gitterstruktur ein Volumen-Bragg-Gitter. Solche Gitter ermöglichen auf vorteilhafte Weise das Einkoppeln von Licht in mehrere Lichtwellenleitern.

In einer Ausführungsform des erfindungsgemäßen Fahrzeugs umfasst die zweite Gitterstruktur ein gemultiplextes Volumen-Bragg-Gitter. Auch hierdurch kann die mögliche Komplexität der mittels der holographischen Folie darstellbaren Projektion nochmals erhöht werden.

Erfindungsgemäß sind die Bilderzeugungseinheit und die holographische Folie derart ausgebildet und zueinander angeordnet, dass ein von der Bilderzeugungseinheit erzeugtes Licht über einen oder mehrere senkrecht zur Transportebene stehende Lichtkegel in die mehreren Lichtwellenleiter eingekoppelt wird. Hierdurch wird eine besonders einfach herzustellende Geometrieanordnung von einzukoppelndem, transportiertem und ausgekoppeltem Licht ermöglicht, bei der das einzukoppelnde Licht auf eine Rückseite der holographische Folie fällt, eingekoppelt und senkrecht zum Einfallwinkel des einzukoppelnden Lichtes innerhalb der Lichtwellenleiter der holographischen Folie transportiert wird und anschließend an einer von der Einkoppelstelle beabstandeten Auskopplungsstelle auf der Vorderseite der holographischen Folie ausgekoppelt wird.

In einer Ausführungsform des erfindungsgemäßen Fahrzeugs ist der Sensor ausgewählt aus einer Gruppe, bestehend aus einem berührungslosen Bewegungssensor, einer berührungslosen Sichtfelderkennung, einem RADAR, einem LIDAR, einem Berührungssensor, einem mechanischen Taster, einem mechanischen Schalter, einem kapazitiven Sensor, einem induktiven Sensor, einer optischen Kamera und einer Time-of-Flight Kamera. Es hat sich gezeigt, dass einer oder mehrerer dieser Sensoren in Verbindung miteinander besonders dazu geeignet sind, eine möglichst fehlerfreie Interaktion eines Nutzers mit der holographischen Folie zu ermöglichen.

In einer Ausführungsform des erfindungsgemäßen Fahrzeugs ist der Sensor zumindest teilweise in die holographische Folie integriert. Dies ist zum einen sehr platzsparend, zum anderen ist für remote sensing-Sensoren wie RADAR oder LIDAR-Sensoren gewährleistet, dass der mit dem Sensor erfasste Raumbereich in unmittelbarer Nähe zur holographischen Folie angeordnet ist. So wird beispielsweise das Risiko verringert, dass eine zufällige Bewegung einer Person zu einer unbeabsichtigten Reaktion des Sensors führt.

In einer Ausführungsform des erfindungsgemäßen Fahrzeugs sind der Rechner und die Bilderzeugungseinheit derart eingerichtet, dass aus einem Teilbereich oder aus mehreren Teilbereichen der holographischen Folie in Abhängigkeit von dem vom Sensor erfassten Messsignal kein Licht oder nur Licht mit einer geringen Intensität ausgekoppelt wird. Diese Eigenschaft ist insbesondere dann von Vorteil, wenn Bereiche der holographischen Folie im Betrieb des Fahrzeuges temporär verdeckt werden, sodass nur ein Teilbereich der holographischen Folie für die Informationswiedergabe genutzt werden kann. Somit kann adaptiv auf ein Verdecken der holographischen Folie reagiert werden. Insbesondere kann hierdurch garantiert werden, dass immer der volle Informationsgehalt anhand der holographischen Folie sichtbar bleibt, wenn auch auf einem verkleinerten Teilbereich der holographischen Folie.

In einer Ausführungsform des erfindungsgemäßen Fahrzeugs ist der Sensor derart ausgestaltet und angeordnet, dass er in dem Betrieb des Fahrzeugs eine Relativbewegung der holographischen Folie gegenüber einer Bodenfläche des Fahrzeugs erfasst, wobei der Rechner derart eingerichtet ist, dass er in dem Betrieb des Fahrzeugs eine Position der visuell wahrnehmbaren Information relativ zu der holographischen Folie in Abhängigkeit von der erfassten Relativbewegung anpasst. Dieser Bezug zur Bodenfläche stellt eine besonders einfache und kostengünstige Möglichkeit dar, den Grad der Verdeckung einer holographischen Folie zu bestimmen. Wenn beispielweise die Geometrie zweier sich temporär verdeckender Wandabschnitte eines Übergangs zwischen zwei Waggons eines Schienenfahrzeugs bekannt sind, kann allein auf Basis der relativen Positionierung des Sensors zur Bodenfläche der Grad der Verdeckung einer an einem der beiden Wandabschnitte aufgebrachten holographischen Folie bestimmt werden.

In einer Ausführungsform des erfindungsgemäßen Fahrzeugs ist die holographische Folie auf einer Seitenwand eines Übergangssystems zwischen zwei beweglich miteinander verbundenen Wagen des Fahrzeugs angeordnet. Die Vorteile der holographischen Folie können bei einem solchen Übergangssystem sehr gut ausgenutzt werden, sodass die relative Beweglichkeit der Seitenwände keinen oder keinen relevanten Einfluss auf die mittels der holographischen Folie verwirklichte Informationswiedergabe hat.

In einer Ausführungsform des erfindungsgemäßen Fahrzeugs ist die Seitenwand mehrteilig, wobei sich bei einem Verschwenken des Übergangssystems ein erstes Seitenwandteil gegenüber einem zweiten Seitenwandteil derart verschiebt, dass das erste Seitenwandteil das zweite Seitenwandteil verdeckt, wobei die holographische Folie auf dem zweiten Seitenwandteil angeordnet ist, wobei der Sensor derart ausgestaltet und angeordnet ist, dass er in dem Betrieb des Fahrzeugs ein Maß für eine Verdeckung des zweiten Seitenwandteils durch das erste Seitenwandteil erfasst und wobei der Rechner derart eingerichtet ist, dass er in dem Betrieb des Fahrzeugs eine Position der visuell wahrnehmbaren Information relativ zu der holographischen Folie in Abhängigkeit von dem Maß für die Verdeckung anpasst.

In einer Ausführungsform des erfindungsgemäßen Fahrzeugs ist der Rechner derart eingerichtet, dass er in dem Betrieb des Fahrzeugs die Position der visuell wahrnehmbaren Information relativ zu der holographischen Folie derart anpasst, dass die visuell wahrnehmbare Information vollständig auf dem nicht vom ersten Seitenwandteil verdeckten Bereich der holographischen Folie oder einem Teilbereich hiervon emittiert wird. Hierdurch erhält der Betrachter immer den vollen Informationsgehalt der Projektion, unabhängig vom Grad der Verdeckung.

In einer Ausführungsform des erfindungsgemäßen Fahrzeugs ist der Sensor derart ausgebildet, dass er eine Bewegung erkennt, wobei der Rechner derart eingerichtet ist, dass in Abhängigkeit einer vom Sensor erkannten Bewegung eine Anpassung des durch die Bilderzeugungseinheit ausgestrahlten Lichtes erfolgt, sodass die visuell wahrnehmbare Information nicht aufgrund der erkannten Bewegung verzerrt wiedergegeben wird.

In einer Ausführungsform des erfindungsgemäßen Fahrzeugs ist der Rechner derart eingerichtet, dass die visuell wahrnehmbare Information dem Betrachter einen Fahrscheinkauf ermöglicht, wobei eine Mehrzahl von Optionen durch den Betrachter auswählbar sind und wobei der Rechner und Sensor zusammen derart eingerichtet sind, dass sie in dem Betrieb des Fahrzeugs eine Auswahl des Betrachters erfassen. Ein derartig verwirklichter Fahrscheinautomat kann beliebig und besonders einfach an sich ändernde Gegebenheiten wie z.B. Preisänderungen angepasst werden. Unter einem Fahrschein ist im Sinne der vorliegenden Erfindung insbesondere ein digitaler Fahrschein zu verstehen.

Der Rechner kann bei einer Ausführungsform des erfindungsgemäßen Fahrzeugs insbesondere derart eingerichtet sein, dass für einen Nutzer der holographischen Folie eine digitale Zahlung durch eine Interaktion mit der holographischen Folie möglich ist.

In einer Ausführungsform des erfindungsgemäßen Fahrzeugs ist die holographische Folie auf einer Fensterscheibe, insbesondere auf einer Fensterscheibe in dem Führerstand des Fahrzeugs, angeordnet, wobei der Rechner derart eingerichtet ist, dass die visuell wahrnehmbare Information mindestens einen Betriebszustand des Fahrzeugs umfasst, wobei der Sensor derart ausgestaltet und angeordnet ist, dass er in dem Betrieb des Fahrzeugs ein Sichtfeld des Betrachters erfasst und wobei der Rechner derart eingerichtet ist, dass er in dem Betrieb der Vorrichtung die Position der visuell wahrnehmbaren Information relativ zu der holographischen Folie in Abhängigkeit von dem erfassten Sichtfeld anpasst. Hierdurch kann die Aufmerksamkeit einer fahrzeugnutzenden bzw. fahrzeugführenden Person für betriebskritische Zustände deutlich erhöht werden.

In einer Ausführungsform des erfindungsgemäßen Fahrzeugs ist der Rechner derart eingerichtet, dass in dem Betrieb der Vorrichtung die visuell wahrnehmbare Information stets im erfassten Sichtfeld des Betrachters emittiert wird. Dies erleichtert der fahrzeugführenden Person das Führen des Fahrzeuges, da sie nicht mehr aktiv eine Körper- insbesondere Kopfbewegung ausführen muss, um die Information wahrnehmen zu können. Vielmehr passt sich die Informationswiedergabe adaptiv an die Körper- bzw. Kopfbewegungen der fahrzeugführenden Person an.

In einer Ausführungsform des erfindungsgemäßen Fahrzeugs ist die holographische Folie auf einer Frontscheibe des Fahrzeugs angeordnet. Insbesondere wenn das Führen des Fahrzeuges einen im Wesentlichen ununterbrochenen Blick aus der Frontscheibe des Fahrzeuges heraus erfordert, ist eine derartige Anordnung der holografischen Folie vorteilhaft, da sie eine Informationswiedergabe ermöglicht, ohne dass der Blick der fahrzeugführenden Person von der Frontscheibe abgewandt werden muss.

In einer Ausführungsform des erfindungsgemäßen Fahrzeugs ist der Sensor derart ausgebildet und/oder ist der Rechner derart eingerichtet, dass eine Gefahrensituation erkennbar ist, wobei der Rechner derart eingerichtet ist, dass die visuelle wahrnehmbare Information einen optischen Reiz enthält, welcher den Blick des Betrachters in eine vordefinierte Richtung lenkt, wenn eine Gefahrensituation erkannt wird. Dies mindert das Risiko, dass eine Gefahrensituation nicht oder nicht rechtzeitig erkannt wird.

In einer Ausführungsform des erfindungsgemäßen Fahrzeugs ist der Rechner derart eingerichtet, dass er in Abhängigkeit von über die holographische Folie erfasste Nutzereingaben die über die holographische Folie dargestellten Informationen an die erfassten Nutzereingaben anpasst. Eine derartige Interaktivität der holographischen Folie erhöht die Nutzungsmöglichkeiten der holographischen Folie.

In einer Ausführungsform des erfindungsgemäßen Fahrzeugs ist der Rechner derart eingerichtet, dass eine Anpassung des Kontrasts und/oder der Helligkeit der visuell wahrnehmbaren Information in Abhängigkeit von einer über die holographische Folie erfassten Nutzereingabe erfolgt. Diese Einrichtung ist insbesondere bei Fahrzeugen vorteilhaft, da sich die Umgebungshelligkeit von Fahrzeugen beständig ändern kann.

In einer Ausführungsform des erfindungsgemäßen Fahrzeugs ist der Sensor derart ausgebildet, dass eine Umgebungshelligkeit erkannt wird, wobei der Rechner derart eingerichtet ist, dass die Helligkeit der visuell wahrnehmbaren Information in Abhängigkeit von der Umgebungshelligkeit angepasst wird. Die Anpassung kann somit derart erfolgen, dass bei einer Abdunkelung der Umgehungshelligkeit auch die Helligkeit der visuell wahrnehmbaren Information abgedunkelt wird und bei einer Aufhellung der Umgebungshelligkeit auch die Helligkeit der visuell wahrnehmbaren Information aufgehellt wird, sodass die Sichtbarkeit immer augenschonend gewährleistet ist.

In einer Ausführungsform des erfindungsgemäßen Fahrzeugs umfasst das Fahrzeug eine Verdunklungseinrichtung, wobei die Verdunklungseinrichtung derart ausgebildet und angeordnet ist, dass die den Hintergrund der holographischen Folie bildende Fläche abdunkelbar ist. Hierdurch kann die Sichtbarkeit im Falle starker Helligkeit, z.B. bei direkter Sonneneinstrahlung, gewährleistet bzw. verbessert werden. Eine solche Verdunklungseinrichtung kann insbesondere in eine Fensterscheibe integriert sein, wenn die holographische Folie auf einer Fensterscheibe aufgebracht ist.

In einer Ausführungsform des erfindungsgemäßen Fahrzeugs ist die holographische Folie auf einer im Innenraum des Fahrzeugs angeordneten Oberfläche der Fensterscheibe aufgebracht, wobei die Fensterscheibe als teilreflektierende Fensterscheibe ausgebildet ist, sodass ein außerhalb des Fahrzeugs befindlicher menschlicher Betrachter im Wesentlichen nicht durch die Fensterscheibe in den Innenraum des Fahrzeugs blicken kann, aber ein innerhalb des Fahrzeugs befindlicher menschlicher Betrachter durch die Fensterscheibe nach außen blicken kann. Hierdurch wird auf vorteilhafte Weise sichergestellt, dass die von einem Nutzer über die holographische Folie abgerufenen oder bereitgestellten Daten nicht von einem außerhalb des Fahrzeugs befindlichen Dritten unrechtmäßig abgegriffen werden können.

In einer Ausführungsform des erfindungsgemäßen Fahrzeugs ist der Sensor derart ausgebildet, dass eine Umgebungshelligkeit erkannt wird, wobei der Rechner und die Verdunklungseinrichtung derart eingerichtet und gekoppelt sind, dass die den Hintergrund der holographischen Folie bildende Fläche abgedunkelt wird, wenn die Umgebungshelligkeit einen vorbestimmten Grenzwert überschreitet. Somit wird die Sichtbarkeit gewährleistet, ohne dass der Betrachter bzw. Nutzer der holographischen Folie hierfür aktiv werden muss.

Weitere Merkmale, Vorteile und Ausführungsformen der vorliegenden Erfindung werden anhand der folgenden Figuren beschrieben. Es zeigen:
- Fig. 1:: eine transparente Frontalansicht einer Fensterscheibe einer ersten Ausführungsform des erfindungsgemäßen Fahrzeugs, wobei auf der Fensterscheibe eine holographische Folie aufgebracht ist,
- Fig. 2A:: eine Querschnittsansicht der in der Fig. 1 gezeigten Fensterscheibe mit holographischer Folie,
- Fig. 2B:: eine Querschnittsansicht eines Wandelements, das einer zweiten Ausführungsform des erfindungsgemäßen Fahrzeuges zugehörig ist,
- Fig. 3A:: eine Frontalansicht einer Wandfläche einer dritten Ausführungsform des erfindungsgemäßen Fahrzeugs in einem teilweise verdeckten Zustand,
- Fig. 3B:: die Wandfläche gemäß Fig. 3A, wobei sich die holographische Folie in einem an den verdeckten Zustand angepassten Zustand befindet.

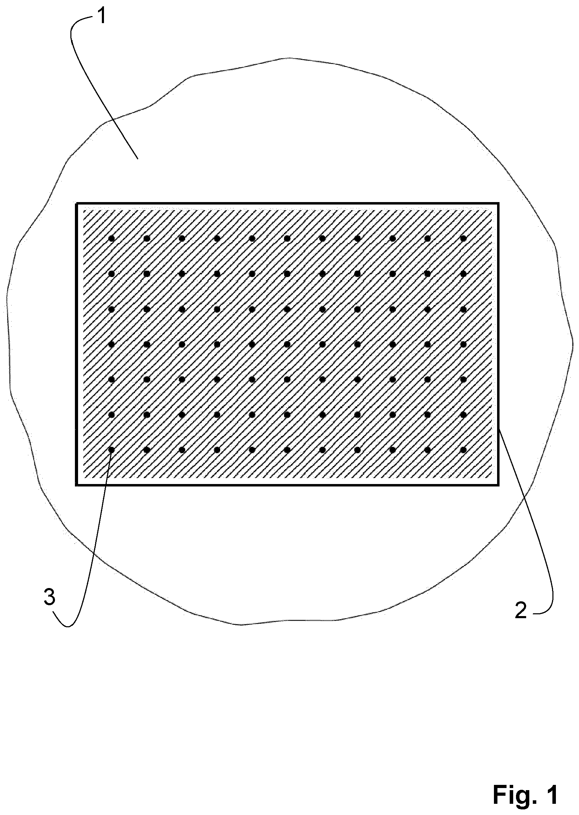

Fig. 1 zeigt eine Fensterscheibe 10 eines Fahrzeugs gemäß einer ersten Ausführungsform mit einer zum Innenraum des Fahrzeugs gerichteten Fensterscheibenoberfläche 1, wobei auf der Fensterscheibe 10, genauer auf der Fensterscheibenoberfläche 1, eine holographische Folie 2 aufgebracht ist. Die Fig. 1 ist eine Frontalansicht, wobei die holographische Folie 2 und die Fensterscheibe 10 transparent dargestellt sind.

Innerhalb der Fensterscheibe ist eine Mehrzahl von Sensoren 3 angeordnet. Bei der hier gezeigten Ausführungsform sind die Sensoren 3 gitterartig über den von der holographischen Folie abgedeckten Bereiche der Fensterscheibe angeordnet. Wie anhand von Fig. 1 ersichtlich, entspricht der Abstand zwischen zwei horizontal beabstandeten Sensoren 3 dabei dem Abstand zweier vertikal beabstandeter Sensoren 3.

Die horizontalen und vertikalen Abstände zwischen den Sensoren 3 können sich aber auch gemäß alternativer Ausführungsformen unterscheiden. Auch sind nicht-gitterartige Anordnungen der Sensoren 3 denkbar. Die Anordnung der Sensoren 3 kann insbesondere derart ausgebildet sein, dass die von den Sensoren 3 erfassten Messwerte einen möglichst geringen statistischen Fehler aufweisen.

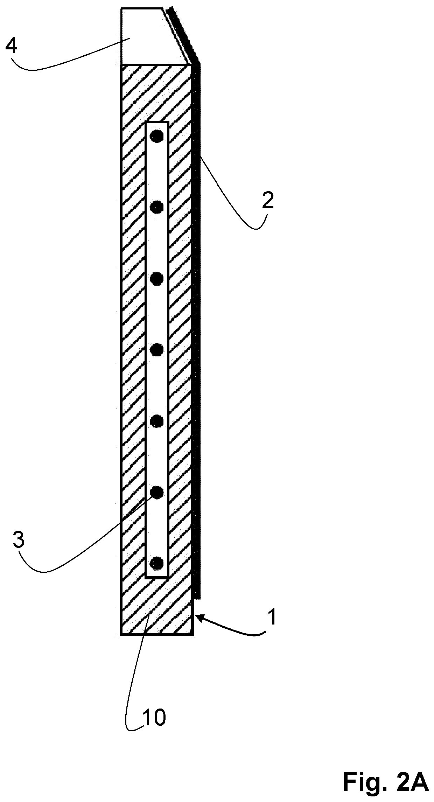

Fig. 2A zeigt, wie die Sensoren 3 innerhalb der Fensterscheibe 10 angeordnet sind. Die Sensoren 3 sind aufgrund dieser Integration in die Fensterscheibe 10 von äußeren Witterungseinwirkungen geschützt.

Die Sensoren 3 können beispielweise RADAR-Sensoren sein. Ein RADAR-Sensor weist einen Emitter zum Emittieren von elektromagnetischer Strahlung im Radiofrequenzbereich oder einen Empfänger zum Detektieren von elektromagnetischer Strahlung im Radiofrequenzbereich auf. Auch kann ein RADAR-Sensor sowohl einen Emitter als auch einen Empfänger aufweisen. Auch kann der Emitter gleichzeitig der Empfänger sein.

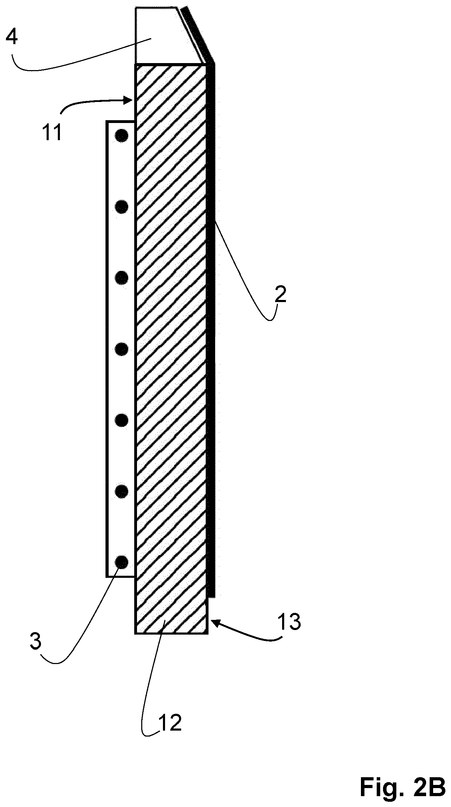

So können mit RADAR-Sensoren, die gemäß der Fig. 1 und Fig. 2 angeordnet sind, beispielsweise Handbewegungen eines Nutzers der holographischen Folie 2 vermessen werden und die dazugehörigen Messdaten an den Rechner weitergegeben werden. Der Rechner kann dann berechnen, welche Intention des Nutzers mit der vermessenen Handbewegung am wahrscheinlichsten zusammenhängt. Hieraus kann vom Rechner eine Konsequenz für die über die holographische Folie 2 darzustellende visuell wahrnehmbare Information abgeleitet werden, sodass die Information sich interaktiv an die Handbewegung des Nutzers anpasst. So kann mittels der holographischen Folie 2 beispielweise ein Fahrkartenkauf erfolgen, bei dem Eingaben vom Nutzer durch bloße Handbewegungen erfolgen. Alternativ kann die holographische Folie 2 auch dazu genutzt werden, dem Nutzer unterschiedliche Entertainment-Programme anzubieten, aus denen der Nutzer durch eine entsprechende Handbewegung auswählen kann. Die Handbewegung kann beispielsweise in einem Tippen oder einem Wischen bestehen.

Bei der in den Figuren 1 und 2A gezeigten Ausführungsform kann es sich gemäß einer hierzu alternativen Ausführungsform auch um ein Wandelement 12 mit einer Wandfläche 13 statt um eine Fensterscheibe 10 mit einer Fensterscheibenoberfläche 1 handeln.

Fig. 2B zeigt eine weitere alternative Ausführungsform, bei der die holographische Folie auf eine Wandfläche 13 eines Wandelements 12 des Fahrzeugs aufgebracht ist und wobei die Sensoren nicht äquivalent zur ersten Ausführungsform innerhalb des Wandelements 12, sondern auf der von der Wandfläche 13 gegenüberliegenden Rückwandfläche 11 angebracht sind. Die Sensoren sind somit für den Nutzer der holographischen Folie nicht sichtbar bei der Nutzung der holographischen Folie 2. Diese Ausführungsform eignet sich insbesondere in Fällen, wenn bereits bestehende Wandelemente 12, die noch keine Sensoren 3 aufweisen, mit entsprechenden Sensoren 3 nachgerüstet werden sollen.

Bei der in der Figur 2B gezeigten Ausführungsform kann es sich gemäß einer hierzu alternativen Ausführungsform auch um eine Fensterscheibe 10 mit einer Fensterscheibenoberfläche 1 statt um ein Wandelement 12 mit einer Wandfläche 13 handeln.

Anhand der Fig. 2A und der 2B ist auch ersichtlich, dass die Bilderzeugungseinheit 4 sehr platzsparend an einer Kantenfläche der holographischen Folie 2 angeordnet werden kann. Bei den hier gezeigten Ausführungsformen wird das von der Bilderzeugungseinheit 4 emittierte Licht an der Oberkante in die Mehrzahl von Lichtwellenleitern der holographischen Folie 2 eingekoppelt. Das Licht wird dann je nach gewünschter Darstellung einer Information zu einer entsprechenden Position der holographischen Folie 2 transportiert und dort wieder von der holographischen Folie 2 in Richtung des Betrachters emittiert, folglich ausgekoppelt.

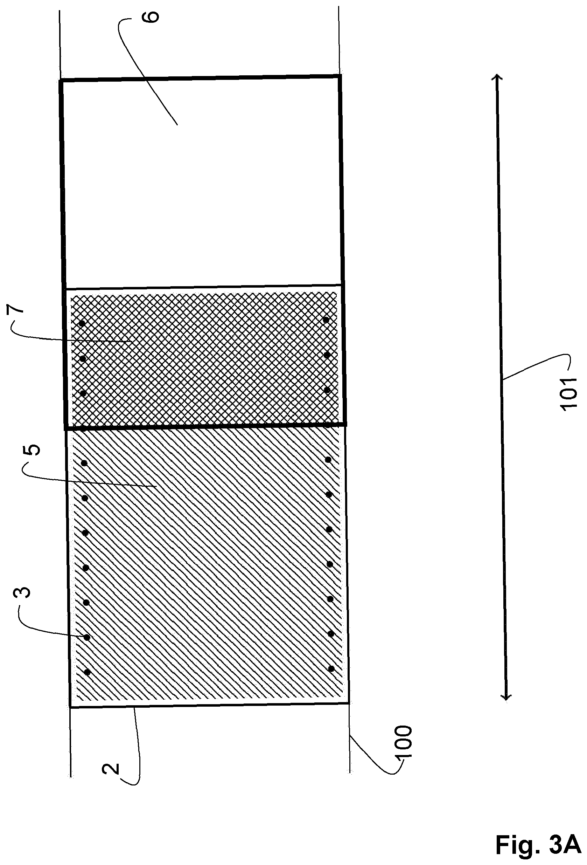

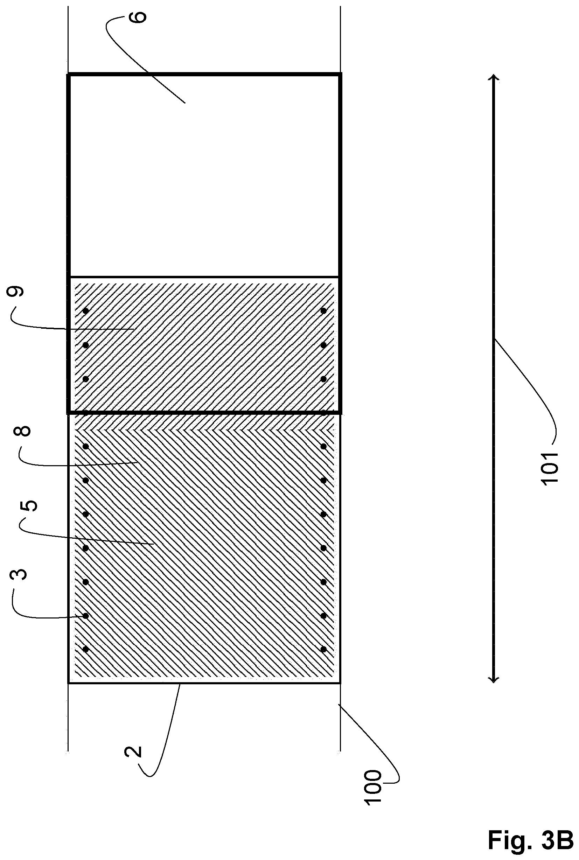

Die Fig. 3A und die Fig. 3B zeigen eine dritte Ausführungsform, bei der sich eine Wandfläche, auf welche die holographische Folie aufgebracht ist, auf einem zweiten Seitenwandteil 5 des Fahrzeugs befindet, welches von einem ersten Seitenwandteil 6 im Betrieb des Fahrzeuges temporär verdeckt wird. Der Fahrzeugboden 100 ist hierbei skizzenhaft durch eine Linie dargestellt. Solch ein System mit erstem und zweitem Seitenwandteil 6, 5 tritt beispielweise bei einem Übergangssystem 101 zwischen zwei Wagenkästen eines Schienenfahrzeugs auf. Das Übergangsystem ist in den Fig. 3A und 3B symbolhaft durch einen Pfeil dargestellt.

Fig. 3A zeigt eine holographische Folie, die auf dem zweiten Seitenwandteil 5 aufgebracht ist, wobei die beiden Seitenwandteile 5, 6 in einem Zustand gezeigt werden, bei dem die holographische Folie 2 von dem ersten Seitenwandteil 6 in einem Überlappungsabschnitt 7 verdeckt wird. Die Sensoren 3 dieser Ausführungsform registrieren die relative Verschiebung des zweiten Seitenwandteils 5 zum ersten Seitenwandteil 6. Mithilfe des Rechners wird dann der Grad der Verdeckung der holographischen Folie bestimmt, d.h. es wird bestimmt, wie groß der Überlappungsbereich 7 ist und wo dieser angeordnet ist. Der Rechner berechnet hierauf aufbauend, in welchem Ausschnittbereich 8 der holographischen Folie die visuelle wahrnehmbare Information ausschließlich dargestellt werden soll, und passt das von der Bilderzeugungseinheit 4 emittierte Licht mittels entsprechender Steuerbefehle daran an.

Das Resultat der mittels des Rechners erfolgten Adaption ist in Fig. 3B dargestellt. Die visuelle wahrnehmbare Information wird jetzt nur noch in dem Ausschnittbereich 8 dargestellt, der für den Betrachter vollständig sichtbar ist. Bei der hier gezeigten Ausführungsform ist der Ausschnittbereich 8 ungleich dem gesamten Bereich der holographischen Folie 2, der kein Überlappungsbereich 7 ist. Vielmehr wird ein Pufferabschnitt zum Überlappungsbereich 7 hinzugerechnet, sodass die visuelle wahrnehmbare Information nicht unmittelbar an der Kante des verdeckenden ersten Seitenwandteils 6 ausgestrahlt wird, da dies sonst zu Verzerrungen der Projektion führen kann. Mit anderen Worten bilden der Überlappungsabschnitt 7 und der Pufferabschnitt einen ausgeblendeten Bereich 9, von dem aus kein Licht aus der holographischen Folie 2 emittiert wird.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichen

- 1: Fensterscheibenoberfläche
- 2: holographische Folie
- 3: Sensor
- 4: Bilderzeugungseinheit
- 5: zweites Seitenwandteil
- 6: erstes Seitenwandteil
- 7: Überlappungsabschnitt
- 8: Ausschnittbereich
- 9: ausgeblendeter Bereich
- 10: Fensterscheibe
- 11: Rückwandfläche
- 12: Wandelement
- 13: Wandfläche
- 100: Fahrzeugboden
- 101: Übergangsabschnitt

## Patentansprüche

1. Fahrzeug, insbesondere Schienenfahrzeug oder Straßenfahrzeug, mit
einer Wandfläche (13) oder Fensterscheibe (10),
einer Bilderzeugungseinheit (4) zum Erzeugen eines Bildes,
einer auf die Wandfläche (13) oder die Fensterscheibe aufgebrachten holographischen Folie (2),
einem Rechner und
einem Sensor (3),
wobei die Bilderzeugungseinheit (4) derart wirksam mit dem Rechner verbunden ist, dass die Bilderzeugungseinheit (4) in einem Betrieb des Fahrzeugs von dem Rechner ein Steuersignal erhält,
wobei die Bilderzeugungseinheit (4), die holographische Folie (2) und der Rechner derart eingerichtet und angeordnet sind, dass in dem Betrieb des Fahrzeugs eine für einen Betrachter visuell wahrnehmbare Information erzeugt wird,
wobei der Sensor (3) derart wirksam mit dem Rechner verbunden ist, dass der Rechner in dem Betrieb des Fahrzeugs von dem Sensor (3) ein Messsignal erhält, und
wobei der Rechner derart eingerichtet ist, dass er in dem Betrieb des Fahrzeugs den an die Bilderzeugungseinheit übermittelten Steuerbefehl in Abhängigkeit von dem Messsignal ändert, sodass das von der Bilderzeugungseinheit erzeugte Bild und in der Folge die visuelle wahrnehmbare Information an das Messsignal angepasst wird,
**dadurch gekennzeichnet, dass**
die holographische Folie (2) eine Mehrzahl von in der holographischen Folie (2) strukturierten Lichtwellenleitern aufweist,
wobei die holographische Folie (2) eine erste Gitterstruktur zum Auskoppeln von Licht aus der Mehrzahl von Lichtwellenleitern aufweist,
wobei die Bilderzeugungseinheit (4) und die holographische Folie (2) derart eingerichtet und angeordnet sind, dass in dem Betrieb des Fahrzeugs von der Bilderzeugungseinheit (4) erzeugtes Licht innerhalb einer Transportebene durch die mehreren Lichtwellenleiter der holographischen Folie (2) geleitet und mittels der ersten Gitterstruktur aus der holographischen Folie (2) ausgekoppelt wird, sodass das ausgekoppelte Licht eine mehrere Bildpunkte aufweisende Projektion erzeugt, welche die visuell wahrnehmbare Information umfasst, und wobei die Bilderzeugungseinheit und die holographische Folie derart ausgebildet und zueinander angeordnet sind, dass ein von der Bilderzeugungseinheit erzeugtes Licht über einen oder mehrere senkrecht zur Transportebene stehende Lichtkegel in die mehreren Lichtwellenleiter eingekoppelt wird.

2. Fahrzeug nach einem der voranstehenden Ansprüche,
wobei die holographische Folie (2) derart ausgebildet und angeordnet ist, dass die visuell wahrnehmbare Information aus der holographischen Folie (2) ausgekoppelt wird und anschließend unmittelbar für den Verwender des Fahrzeugs bei einer üblichen Verwendung des Fahrzeugs wahrnehmbar ist, insbesondere ohne dass das ausgekoppelte Licht nochmals reflektiert werden muss, um für den Verwender bei einer üblichen Verwendung des Fahrzeugs wahrnehmbar zu werden.

3. Fahrzeug nach einem der voranstehenden Ansprüche,
wobei die erste Gitterstruktur derart ausgebildet ist, dass das durch die mehreren Lichtwellenleiter der holographischen Folie (2) geleitete Licht innerhalb im Wesentlichen senkrecht zur Transportebene stehender Lichtkegel aus den mehreren Lichtwellenleitern ausgekoppelt wird.

4. Fahrzeug nach dem voranstehenden Anspruch,
wobei die holographische Folie (2) eine zweite Gitterstruktur aufweist, wobei dabei die Bilderzeugungseinheit (4) und die holographische Folie (2) derart eingerichtet und angeordnet sind, dass in dem Betrieb des Fahrzeugs das von der Bilderzeugungseinheit (4) erzeugte Licht mittels der zweiten Gitterstruktur in die Mehrzahl von Lichtwellenleitern eingekoppelt wird.

5. Fahrzeug nach einem der vorhergehenden Ansprüche,
wobei der Sensor (3) ausgewählt ist aus einer Gruppe bestehend aus einem berührungslosen Bewegungssensor, einer berührungslosen Sichtfelderkennung, einem RADAR, einem LIDAR, einem Berührungssensor, einem mechanischem Taster, einem mechanischen Schalter, einem kapazitiven Sensor, einem induktivem Sensor, einer optischen Kamera und einer Time-of-Flight Kamera.

6. Fahrzeug nach einem der vorhergehenden Ansprüche,
wobei der Sensor (3) zumindest teilweise in die holographische Folie (2) integriert ist.

7. Fahrzeug nach einem der vorhergehenden Ansprüche,
wobei der Rechner und die Bilderzeugungseinheit (4) derart eingerichtet sind, dass aus einem Teilbereich oder aus mehreren Teilbereichen der holographischen Folie (2) in Abhängigkeit von dem vom Sensor (3) erfassten Messsignal kein Licht oder nur Licht mit einer geringen Intensität ausgekoppelt wird.

8. Fahrzeug nach einem der vorhergehenden Ansprüche,
wobei der Sensor (3) derart ausgestaltet und angeordnet ist, dass er in dem Betrieb des Fahrzeugs eine Relativbewegung der holographischen Folie (2) gegenüber einer Bodenfläche des Fahrzeugs erfasst,
wobei der Rechner derart eingerichtet ist, dass er in dem Betrieb des Fahrzeugs eine Position der visuell wahrnehmbaren Information relativ zu der holographischen Folie (2) in Abhängigkeit von der erfassten Relativbewegung anpasst.

9. Fahrzeug nach einem der vorhergehenden Ansprüche,
wobei die holographische Folie (2) auf einer Seitenwand eines Übergangssystems zwischen zwei beweglich miteinander verbundenen Wagen des Fahrzeugs angeordnet ist, wobei gemäß einer bevorzugten Variante die Seitenwand mehrteilig ist und wobei sich bei einem Verschwenken des Übergangssystems ein erstes Seitenwandteil (5) gegenüber einem zweiten Seitenwandteil (6) derart verschiebt, dass das erste Seitenwandteil (5) das zweite Seitenwandteil (6) verdeckt, wobei die holographische Folie (2) auf dem zweiten Seitenwandteil (6) angeordnet ist, wobei der Sensor (3) derart ausgestaltet und angeordnet ist, dass er in dem Betrieb des Fahrzeugs ein Maß für eine Verdeckung des zweiten Seitenwandteils (6) durch das erste Seitenwandteil (5) erfasst und wobei der Rechner derart eingerichtet ist, dass er in dem Betrieb des Fahrzeugs eine Position der visuell wahrnehmbaren Information relativ zu der holographischen Folie (2) in Abhängigkeit von dem Maß für die Verdeckung anpasst,
wobei gemäß einer besonders bevorzugten Variante der Rechner derart eingerichtet ist, dass er in dem Betrieb des Fahrzeugs die Position der visuell wahrnehmbaren Information relativ zu der holographischen Folie (2) derart anpasst, dass die visuell wahrnehmbare Information vollständig auf dem nicht vom ersten Seitenwandteil (5) verdeckten Bereich der holographischen Folie (2) oder einem Teilbereich hiervon emittiert wird.

10. Fahrzeug nach einem der vorhergehenden Ansprüche,
wobei der Sensor (3) derart ausgebildet ist, dass er eine Bewegung erkennt,
wobei der Rechner derart eingerichtet ist, dass in Abhängigkeit einer vom Sensor (3) erkannten Bewegung eine Anpassung des durch die Bilderzeugungseinheit (4) ausgestrahlten Lichtes erfolgt, sodass die visuell wahrnehmbare Information nicht aufgrund der erkannten Bewegung verzerrt wiedergegeben wird.

11. Fahrzeug nach einem der vorhergehenden Ansprüche,
wobei der Rechner derart eingerichtet ist, dass die visuell wahrnehmbare Information dem Betrachter einen Fahrscheinkauf ermöglicht,
wobei eine Mehrzahl von Optionen durch den Betrachter auswählbar ist und wobei der Rechner und Sensor (3) zusammen derart eingerichtet sind, dass sie in dem Betrieb des Fahrzeugs eine Auswahl des Betrachters erfassen.

12. Fahrzeug nach einem der vorhergehenden Ansprüche,
wobei die holographische Folie (2) auf einer Fensterscheibe, insbesondere auf einer Fensterscheibe in dem Führerstand des Fahrzeugs, angeordnet ist, wobei der Rechner derart eingerichtet ist, dass die visuell wahrnehmbare Information mindestens einen Betriebszustand des Fahrzeugs umfasst, wobei der Sensor (3) derart ausgestaltet und angeordnet ist, dass er in dem Betrieb des Fahrzeugs ein Sichtfeld des Betrachters erfasst und wobei der Rechner derart eingerichtet ist, dass er in dem Betrieb der Vorrichtung die Position der visuell wahrnehmbaren Information relativ zu der holographischen Folie (2) in Abhängigkeit von dem erfassten Sichtfeld anpasst,
wobei gemäß einer bevorzugten Variante der Rechner derart eingerichtet ist, dass in dem Betrieb der Vorrichtung die visuell wahrnehmbare Information stets im erfassten Sichtfeld des Betrachters emittiert wird.

13. Fahrzeug nach einem der vorhergehenden Ansprüche,
wobei der Sensor (3) derart ausgebildet ist und/oder der Rechner derart eingerichtet ist, dass eine Gefahrensituation erkennbar ist,
wobei der Rechner derart eingerichtet ist, dass die visuelle wahrnehmbare Information einen optischen Reiz enthält, welcher den Blick des Betrachters in eine vordefinierte Richtung lenkt, wenn eine Gefahrensituation erkannt wird.

14. Fahrzeug nach einem der vorhergehenden Ansprüche,
wobei der Rechner derart eingerichtet ist, dass er in Abhängigkeit von über die die holographische Folie (2) erfassten Nutzereingaben die über die holographische Folie (2) dargestellten Informationen an die erfassten Nutzereingaben anpasst.

## Claims

1. Vehicle, in particular rail vehicle or road vehicle, comprising
a wall surface (13) or window pane (10),
an image-generating unit (4) for generating an image,
a holographic foil (2) applied to the wall surface (13) or the window pane,
a computer, and
a sensor (3),
the image-generating unit (4) being operatively connected to the computer such that, during operation of the vehicle, the image-generating unit (4) receives a control signal from the computer,
the image-generating unit (4), the holographic foil (2) and the computer being configured and arranged such that, during operation of the vehicle, information which is visually perceptible to an observer is generated,
the sensor (3) being operatively connected to the computer such that, during operation of the vehicle, the computer receives a measurement signal from the sensor (3), and
the computer being configured such that, during operation of the vehicle, the computer changes the control command transmitted to the image-generating unit depending on the measurement signal so that the image generated by the image-generating unit and consequently the visual perceptible information are adjusted to the measurement signal,
**characterized in that**
the holographic foil (2) has a plurality of optical waveguides which are structured in the holographic foil (2),
the holographic foil (2) having a first grating structure for coupling light out of the plurality of optical waveguides,
the image-generating unit (4) and the holographic foil (2) being configured and arranged such that, during operation of the vehicle, light generated by the image-generating unit (4) is guided within a transport plane through the plurality of optical waveguides of the holographic foil (2) and is coupled out of the holographic foil (2) by means of the first grating structure so that the coupled-out light generates a projection which has a plurality of pixels and comprises the visually perceptible information, and
the image-generating unit and the holographic foil being designed and arranged relative to one another such that a light generated by the image-generating unit is coupled into the plurality of optical waveguides via one or more light cones which are perpendicular to the transport plane.

2. Vehicle according to any of the preceding claims,
wherein the holographic foil (2) is designed and arranged such that the visually perceptible information is coupled out of the holographic foil (2) and is then immediately perceptible to the user of the vehicle during normal use of the vehicle, in particular without the coupled-out light having to be reflected again in order to become perceptible to the user during normal use of the vehicle.

3. Vehicle according to any of the preceding claims,
wherein the first grating structure is designed such that the light guided through the plurality of optical waveguides of the holographic foil (2) is coupled out of the plurality of optical waveguides within light cones which are substantially perpendicular to the transport plane.

4. Vehicle according to the preceding claim,
wherein the holographic foil (2) has a second grating structure, wherein the image-generating unit (4) and the holographic foil (2) are configured and arranged such that, during operation of the vehicle, the light generated by the image-generating unit (4) is coupled into the plurality of optical waveguides by means of the second grating structure.

5. Vehicle according to any of the preceding claims,
wherein the sensor (3) is selected from a group consisting of a non-contact motion sensor, a non-contact field of view detection means, a RADAR, a LIDAR, a touch sensor, a mechanical button, a mechanical switch, a capacitive sensor, an inductive sensor, an optical camera and a time-of-flight camera.

6. Vehicle according to any of the preceding claims,
wherein the sensor (3) is at least partly integrated into the holographic foil (2).

7. Vehicle according to any of the preceding claims,
wherein the computer and the image-generating unit (4) are configured such that no light or only light with a low intensity is coupled out of a portion or out of a plurality of portions of the holographic foil (2) depending on the measurement signal detected by the sensor (3).

8. Vehicle according to any of the preceding claims,
wherein the sensor (3) is designed and arranged such that, during operation of the vehicle, the sensor detects a relative movement of the holographic foil (2) with respect to a floor surface of the vehicle,
wherein the computer is configured such that, during operation of the vehicle, the computer adjusts a position of the visually perceptible information relative to the holographic foil (2) depending on the detected relative movement.

9. Vehicle according to any of the preceding claims,
wherein the holographic foil (2) is arranged on a side wall of a transitional system between two movably connected carriages of the vehicle, wherein, according to a preferred variant, the side wall is in multiple parts and wherein, when the transitional system is pivoted, a first side wall part (5) is shunted with respect to a second side wall part (6) such that the first side wall part (5) covers the second side wall part (6), wherein the holographic foil (2) is arranged on the second side wall part (6), wherein the sensor (3) is designed and arranged such that, during operation of the vehicle, the sensor detects a degree to which the second side wall part (6) is covered by the first side wall part (5), and wherein the computer is configured such that, during operation of the vehicle, the computer adjusts a position of the visually perceptible information relative to the holographic foil (2) depending on the degree of covering,
wherein, according to a particularly preferred variant, the computer is configured such that, during operation of the vehicle, the computer adjusts the position of the visually perceptible information relative to the holographic foil (2) such that the visually perceptible information is emitted entirely on the region of the holographic foil (2) not covered by the first side wall part (5) or on a portion thereof.

10. Vehicle according to any of the preceding claims,
wherein the sensor (3) is designed such that it detects a movement,
wherein the computer is configured such that, depending on a movement detected by the sensor (3), the light radiated by the image-generating unit (4) is adjusted so that the visually perceptible information is not reproduced in a distorted manner due to the detected movement.

11. Vehicle according to any of the preceding claims,
wherein the computer is configured such that the visually perceptible information makes it possible for the observer to purchase a ticket,
wherein a plurality of options can be selected by the observer, and wherein the computer and sensor (3) together are configured such that, during operation of the vehicle, they detect the observer's selection.

12. Vehicle according to any of the preceding claims,
wherein the holographic foil (2) is arranged on a window pane, in particular on a window pane in the driver's cab of the vehicle, wherein the computer is configured such that the visually perceptible information comprises at least one operating state of the vehicle, wherein the sensor (3) is designed and arranged such that, during operation of the vehicle, the sensor detects the observer's field of view, and wherein the computer is configured such that, during operation of the device, the computer adjusts the position of the visually perceptible information relative to the holographic foil (2) depending on the detected field of view,
wherein, according to a preferred variant, the computer is configured such that, during operation of the device, the visually perceptible information is always emitted in the observer's detected field of view.

13. Vehicle according to any of the preceding claims,
wherein the sensor (3) is designed and/or the computer is configured such that a dangerous situation can be detected,
wherein the computer is configured such that the visually perceptible information contains an optical stimulus which directs the observer's gaze in a predefined direction when a dangerous situation is detected.

14. Vehicle according to any of the preceding claims,
wherein the computer is configured such that, depending on user inputs detected via the holographic foil (2), the computer adjusts the information displayed via the holographic foil (2) to the detected user inputs.

## Revendications

1. Véhicule, en particulier véhicule ferroviaire ou véhicule routier, comportant
une surface de paroi (13) ou une vitre de fenêtre (10),
une unité de formation d'image (4) permettant de former une image,
un film holographique (2) appliqué sur la surface de paroi (13) ou sur la vitre de fenêtre,
un ordinateur et
un capteur (3),
dans lequel l'unité de formation d'image (4) est connectée de façon opérationnelle à l'ordinateur de telle sorte que l'unité de formation d'image (4) reçoit un signal de commande de l'ordinateur lors du fonctionnement du véhicule,
dans lequel l'unité de formation d'image (4), le film holographique (2) et l'ordinateur sont configurés et disposés de telle sorte que, lors du fonctionnement du véhicule, une information visuellement perceptible par un observateur est générée,
dans lequel le capteur (3) est connecté de façon opérationnelle à l'ordinateur de telle sorte que l'ordinateur reçoit un signal de mesure du capteur (3) lors du fonctionnement du véhicule, et
dans lequel l'ordinateur est configuré de manière à modifier, lors du fonctionnement du véhicule, l'instruction de commande transmise à l'unité de formation d'image en fonction du signal de mesure, de sorte que l'image générée par l'unité de formation d'image et, par la suite, l'information visuellement perceptible sont adaptées au signal de mesure,
**caractérisée en ce que**
le film holographique (2) présente une pluralité de guides d'ondes lumineuses structurés dans le film holographique (2),
dans lequel le film holographique (2) présente une première structure de grille permettant de coupler la lumière en provenance de la pluralité de guides d'ondes lumineuses,
dans lequel l'unité de formation d'image (4) et le film holographique (2) sont configurés et disposés de telle sorte que, lors du fonctionnement du véhicule, la lumière générée par l'unité de formation d'image (4) est guidée à l'intérieur d'un plan de transport à travers la pluralité de guides d'ondes lumineuses du film holographique (2) et est découplée du film holographique (2) par le biais de la première structure de grille, de sorte que la lumière découplée génère une projection présentant plusieurs points d'image, laquelle projection comprend l'information visuellement perceptible, et
dans lequel l'unité de formation d'image et le film holographique sont conçus et disposés l'un par rapport à l'autre de telle sorte qu'une lumière générée par l'unité de formation d'image est couplée dans la pluralité de guides d'ondes lumineuses par l'intermédiaire d'un ou de plusieurs cônes de lumière perpendiculaires au plan de transport.

2. Véhicule selon l'une des revendications précédentes,
dans lequel le film holographique (2) est conçu et disposé de telle sorte que l'information visuellement perceptible est découplée du film holographique (2) et est ensuite directement perceptible pour l'utilisateur du véhicule lors d'une utilisation habituelle du véhicule, en particulier sans que la lumière découplée doive être réfléchie à nouveau pour être perceptible pour l'utilisateur lors d'une utilisation habituelle du véhicule.

3. Véhicule selon l'une des revendications précédentes,
dans lequel la première structure de grille est conçue de telle sorte que la lumière guidée par la pluralité de guides d'ondes lumineuses du film holographique (2) est découplée de la pluralité de guides d'ondes lumineuses à l'intérieur de cônes de lumière sensiblement perpendiculaires au plan de transport.

4. Véhicule selon la revendication précédente,
dans lequel le film holographique (2) présente une seconde structure de grille, dans lequel l'unité de formation d'image (4) et le film holographique (2) sont configurés et disposés de telle sorte que, lors du fonctionnement du véhicule, la lumière générée par l'unité de formation d'image (4) est couplée dans la pluralité de guides d'ondes lumineuses par le biais de la seconde structure de grille.

5. Véhicule selon l'une des revendications précédentes,
dans lequel le capteur (3) est choisi dans un groupe constitué d'un capteur de mouvement sans contact, d'une reconnaissance de champ de vision sans contact, d'un RADAR, d'un LIDAR, d'un capteur tactile, d'un bouton mécanique, d'un commutateur mécanique, d'un capteur capacitif, d'un capteur inductif, d'une caméra optique et d'une caméra à temps de vol.

6. Véhicule selon l'une des revendications précédentes,
dans lequel le capteur (3) est au moins partiellement intégré dans le film holographique (2).

7. Véhicule selon l'une des revendications précédentes,
dans lequel l'ordinateur et l'unité de formation d'image (4) sont configurés de telle sorte qu'aucune lumière n'est découplée ou seulement une lumière de faible intensité est découplée d'une zone partielle ou de plusieurs zones partielles du film holographique (2) en fonction du signal de mesure détecté par le capteur (3).

8. Véhicule selon l'une des revendications précédentes,
dans lequel le capteur (3) est réalisé et disposé de telle sorte que, lors du fonctionnement du véhicule, il détecte un mouvement relatif du film holographique (2) par rapport à une surface de plancher du véhicule,
dans lequel l'ordinateur est configuré de telle sorte que, lors du fonctionnement du véhicule, il adapte une position de l'information visuellement perceptible par rapport au film holographique (2) en fonction du mouvement relatif détecté.

9. Véhicule selon l'une des revendications précédentes,
dans lequel le film holographique (2) est disposé sur une paroi latérale d'un système transitoire entre deux chariots du véhicule, reliés entre eux de manière mobile, dans lequel la paroi latérale est réalisée en plusieurs parties, conformément à une variante préférée, et dans lequel, lors d'un pivotement du système transitoire, une première partie de paroi latérale (5) se déplace par rapport à une seconde partie de paroi latérale (6) de telle sorte que la première partie de paroi latérale (5) recouvre la seconde partie de paroi latérale (6), dans lequel le film holographique (2) est disposé sur la seconde partie de paroi latérale (6), dans lequel le capteur (3) est réalisé et disposé de telle sorte que, lors du fonctionnement du véhicule, il détecte une mesure pour un recouvrement de la seconde partie de paroi latérale (6) par la première partie de paroi latérale (5), et dans lequel l'ordinateur est configuré de telle sorte que, lors du fonctionnement du véhicule, il adapte une position de l'information visuellement perceptible par rapport au film holographique (2) en fonction de la mesure pour le recouvrement,
dans lequel, conformément à une variante particulièrement préférée, l'ordinateur est configuré de telle sorte que, lors du fonctionnement du véhicule, il adapte la position de l'information visuellement perceptible par rapport au film holographique (2) de telle sorte que l'information visuellement perceptible soit émise entièrement sur la zone du film holographique (2) non recouverte par la première partie de paroi latérale (5) ou sur une zone partielle de celle-ci.

10. Véhicule selon l'une des revendications précédentes,
dans lequel le capteur (3) est conçu de telle sorte qu'il détecte un mouvement,
dans lequel l'ordinateur est configuré de telle sorte qu'en fonction d'un mouvement détecté par le capteur (3), une adaptation de la lumière émise par l'unité de formation d'image (4) est effectuée, de sorte que l'information visuellement perceptible n'est pas reproduite de manière déformée en raison du mouvement détecté.

11. Véhicule selon l'une des revendications précédentes,
dans lequel l'ordinateur est configuré de telle sorte que l'information visuellement perceptible permette à l'observateur d'acheter des billets,
dans lequel une pluralité d'options peuvent être sélectionnées par l'observateur et dans lequel l'ordinateur et le capteur (3) sont configurés ensemble pour détecter une sélection de l'observateur lors du fonctionnement du véhicule.

12. Véhicule selon l'une des revendications précédentes,
dans lequel le film holographique (2) est disposé sur une vitre, en particulier sur une vitre dans la cabine de conduite du véhicule, dans lequel l'ordinateur est configuré de telle sorte que l'information visuellement perceptible comprend au moins un état de fonctionnement du véhicule, dans lequel le capteur (3) est conçu et disposé de telle sorte qu'il détecte un champ de vision de l'observateur lors du fonctionnement du véhicule, et dans lequel l'ordinateur est configuré de telle sorte que, lors du fonctionnement du dispositif, il adapte la position de l'information visuellement perceptible par rapport au film holographique (2) en fonction du champ de vision détecté,
dans lequel, conformément à une variante préférée, l'ordinateur est configuré de telle sorte que, lors du fonctionnement du dispositif, l'information visuellement perceptible est toujours émise dans le champ de vision détecté de l'observateur.

13. Véhicule selon l'une des revendications précédentes,
dans lequel le capteur (3) est conçu et/ou l'ordinateur est configuré de telle sorte qu'une situation de danger est reconnaissable,
dans lequel l'ordinateur est configuré de telle sorte que l'information visuellement perceptible contient un stimulus optique qui dirige le regard de l'observateur dans une direction prédéfinie lorsqu'une situation de danger est détectée.

14. Véhicule selon l'une des revendications précédentes,
dans lequel l'ordinateur est configuré de telle sorte que, en fonction des entrées d'utilisateur saisies par l'intermédiaire du film holographique (2), il adapte les informations représentées par l'intermédiaire du film holographique (2) aux entrées d'utilisateur saisies.
